# EUROPÄISCHE PATENTSCHRIFT

(11) **EP 1 329 285 B1**
(45) Veröffentlichungstag und Bekanntmachung des Hinweises auf die Patenterteilung: **02.06.2004**
(21) Anmeldenummer: 03000705.8
(22) Anmeldetag: 13.01.2003
(51) Int. Cl.: B23Q 11/08

(54) **Stabilisierungsschere für eine Schutzabdeckung**
Articulated stabilising structure for a protective covering
Structure de stabilisation articulée pour un capot de protection

(30) Priorität: 18.01.2002 DE 20200701 U
(43) Veröffentlichungstag der Anmeldung: 23.07.2003
(73) Patentinhaber: HEMA Maschinen- und Apparateschutz GmbH, 63500 Seligenstadt (DE)
(72) Erfinder: Walter, Dieter, 63500 Seligenstadt (DE)
(74) Vertreter: Schumacher, Bernd, Dipl.-Ing.

(56) Entgegenhaltungen:
- EP-A- 0 341 411
- EP-A- 0 963 809
- WO-A-01/15852
- DE-C- 954 304
- US-A- 3 824 890

## Beschreibung

Die Erfindung betrifft eine Stabilisierungsschere für eine zum Abdecken von Maschinenteiten dienende längenveränderliche Schutzabdeckung, wobei die längenveränderliche Stabilisierungsschere aus mehreren, sich endseitig überlappenden und dort gelenkig miteinander verbundenen Scherenstäben besteht, die wenigstens zwei zickzackförmige, sich gegenseitig überkreuzende und im Überkreuzungsbereich gelenkig miteinander verbundene Scherenstab-Reihen bilden, und wobei die Scherenstäbe an ihren gegenseitigen Gelenkverbindungen mit der Schutzabdeckung verbindbar sind, gemäß dem Oberbegriff von Patentanspruch 1. (DE-A-954304).

Bei bekannten Schutzabdeckungen bestehen die mit deren Einzelteilen ständig hin- und herbewegten Scherenstäbe aus metallischem Vollmaterial, nämlich aus massivem Stahl oder Aluminium. Die maximalen Arbeitsgeschwindigkeiten herkömmlicher Stabilisierungsscheren betragen etwa 40 m/min. Die Stabilisierungsschere befindet sich mit den Scherenstäben stets an der durch die Schutzabdeckung beispielsweise vor Flüssigkeiten, wie Maschinenöl, und/oder metallischen Kleinteilen, wie Drehspänen, zu schützenden Maschinenseite.

Der vorliegenden Erfindung liegt die Aufgabe zugrunde, eine wesentlich vielseitiger sowie langlebiger einsetzbare, kostengünstigere und mit deutlich höheren Arbeitsgeschwindigkeiten betreibbare Stabilisierungsschere zu schaffen.

Zur Lösung der gestellten Aufgabe zeichnet sich eine Stabilisierungsschere der im Oberbegriff von Anspruch 1 genannten Art erfindungsgemäß durch die im Kennzeichen dieses Anspruchs aufgeführten Merkmale aus, nämlich dadurch, daß die Scherenstäbe aus geschlossenen kastenförmigen Hohlprofilen bestehen.

Derartig aufgebaute Scherenstäbe sind bei zumindest gleicher Stabilität wesentlich leichter und damit auch preiswerter. Aufgrund ihrer erheblich kleineren mechanischen Trägheit können sie deutlich stärker beschleunigt und somit auf größere Arbeitsgeschwindigkeiten von beispielsweise bis zu etwa 120-150 m/min gebracht werden.

Ein flaches Kastenprofil gemäß der weiteren Ausbildung aus Anspruch 2 hat sich in der Praxis besonders bewährt und läßt sich raumsparend einbauen.

Als bevorzugtes, besonders leichtes Material für die Scherenstäbe eignet sich gemäß den Ansprüchen 3 und 4 Leichtmetall, wie Aluminium, und gemäß den Ansprüchen 5 und 6 grundsätzlich auch Kunststoff, wie faserverstärkter, beispielsweise glasfaserverstärkter, Kunststoff. Wegen des gewichtsreduzierenden Hohlprofils kann aber gemäß Anspruch 7 grundsätzlich auch Stahl benutzt werden.

Um die Stabilität des Hohlprofils der Scherenstäbe weiter zu verbessern, kann dieses gemäß Anspruch 8 auch eine oder mehrere innere Versteifungsrippen aufweisen. Dadurch ist es möglich, die Wandstärke des Hohlprofils und damit dessen Gewicht weiter zu reduzieren.

Die bevorzugte Weiterbildung von Anspruch 9 ermöglicht einen langzeitig definierten Arbeitsbetrieb, besonders schnelle sowie ruhige Bewegungsabläufe und eine einfache Wartung. Das Bewegungsspiel der Gelenkverbindungen kann an die jeweiligen Betriebserfordernisse angepaßt und so klein wie möglich gehalten werden, damit eine optimale Stabilisierung bei größtmöglicher Geschwindigkeit sowie Laufruhe erzielbar ist.

Die weitere Ausgestaltung von Anspruch 10 sichert eine definierte, jederzeit leicht sowie schnell nachjustierbare Einstellbarkeit der Drehlagerung und eine optimale Laufruhe. Eine Ausbildung der Lager-Ringe gemäß den Ansprüchen 11 bis 13 aus Kunststoff, wie Polyamid, oder Nichteisenmetall, wie Messing oder Bronze, führt zu langzeitig stabilen Bewegungsverhältnissen und erlaubt große Relativgeschwindigkeiten zwischen den Einzelteilen.

Weitere für den praktischen Einsatz vorteilhafte Merkmale ergeben sich aus den Ansprüchen 14 bis 18.

Die Erfindung wird nachfolgend an zeichnerisch dargestellten Ausführungsbeispielen näher erläutert. Es zeigen:
- Fig. 1: in einer vereinfachten Seitenansicht einen Teil einer Stabilisierungsschere nach der vorliegenden Erfindung in einer vereinfachten Seitenansicht,
- Fig. 2a: ein Hohlprofil eines ersten Scherenstabes im Querschnitt,
- Fig. 2b: ein mit einer inneren Versteifungsrippe ausgebildetes Hohlprofil eines zweiten Scherenstabes im Querschnitt,
- Fig. 3: in einer geschnittenen Detailansicht eine an einer als Faltenbalg ausgebildeten Schutzabdeckung gehaltene Stabilisierungsschere im Bereich ihrer Drehlagerung,
- Fig. 4: in einer teilweise geschnittenen perspektivischen Ansicht zwei Stabilisierungsscheren im Inneren einer Schutzabdeckung in Form einer Teleskop-Stahlabdeckung mit koaxial ineinandergreifenden, U-förmig abwinkelten Teleskopteilen und
- Fig. 5: in einer perspektivischen Seitenansicht zwei Stabilisierungsscheren an einer Seite einer Schutzabdeckung in Form einer Teleskop-Lamellenabdeckung mit sich gegenseitig überlagernden Lamellen.

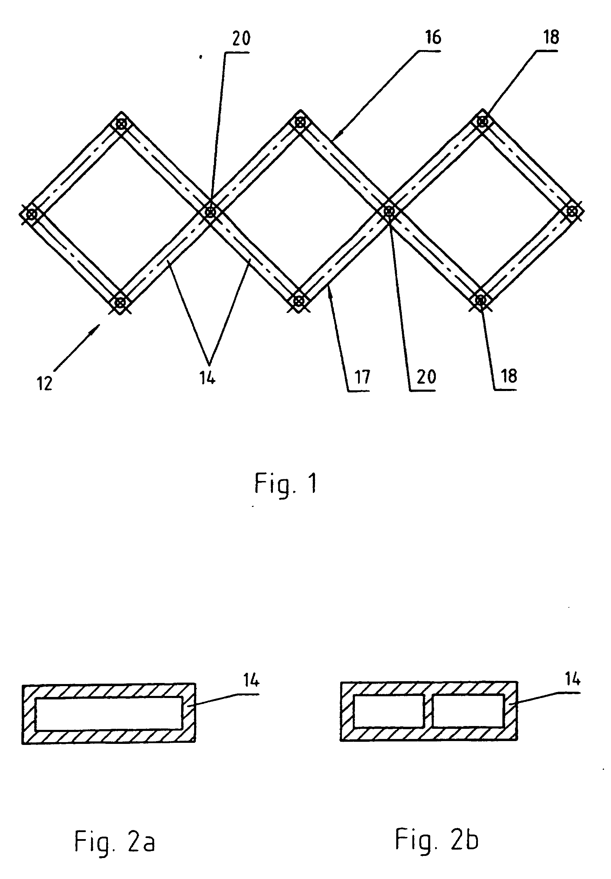

Gemäß Figur 1 besteht eine Stabilisierungsschere 12 aus sich endseitig überlappenden und dort miteinander gelenkig verbundenen einzelnen Scherenstäben 14, die im vorliegenden Fall zwei zickzackförmige, sich gegenseitig überkreuzende und im Überkreuzungsbereich gelenkig miteinander verbundene Scherenstab-Reihen 16, 17 bilden. Während die Scherenstäbe 14 einer jeden Scherenstab-Reihe 16, 17 endseitig durch definiert einstellbare Drehgelenke 18 miteinander verbunden sind, sorgen ebenfalls definiert einstellbare Drehgelenke 20 für ein gegenseitiges Verbinden der Scherenstab-Reihen 16, 17 untereinander und mit einer in dieser Figur nicht dargestellten Schutzabdeckung.

Die Scherenstäbe 14 bestehen gemäß Fig. 2a aus einem flachen kastenförmigen Hohlprofil, das gemäß Fig. 2b zusätzlich zumindest eine innere Versteifungsrippe aufweisen kann. Das Hohlprofil kann gezogen oder stranggepreßt sein und beispielsweise aus Leichtmetall, wie Aluminium, oder Kunststoff, wie glasfaserverstärktem Kunststoff, bestehen.

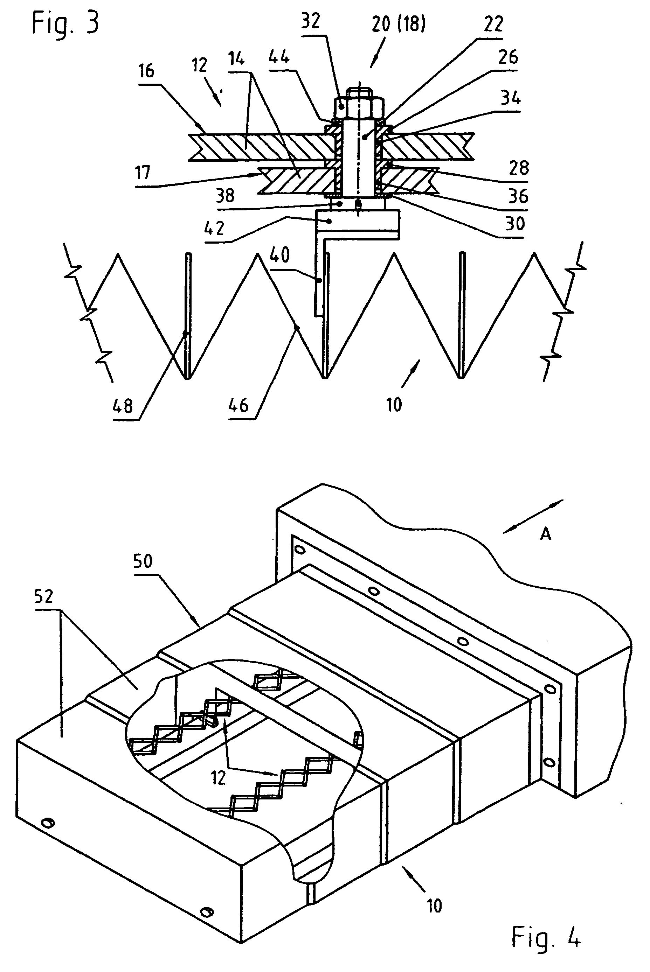

In Figur 3 ist ein Teil einer Schutzabdeckung 10 in Form eines Faltenbalges 46 mit gegenseitig beabstandeten Faltenbalg-Rahmen 48, beispielsweise aus PVC, vereinfacht dargestellt. Es ist ersichtlich, daß im Bereich der Drehgelenke 20 die Scherenstäbe 14 verschiedener Scherenstab-Reihen 16, 17 sich gegenseitig überlagern und von einem Lagerbolzen 22 durchdrungen sind. Dieser ist im vorliegenden Fall von drei Lager-Ringen 26, 28, 30 umgeben, von denen die beiden Lager-Ringe 26, 28 in den Lagerbolzen 22 umschließende Lager-Hülsen 34, 36 übergehen. Der Lagerbolzen 22 hat einem Ende einen Bolzenkopf 38 und am anderen Ende ein Außengewinde mit einer hiermit verschraubbaren Sicherungsmutter 32. Diese ermöglicht - im vorliegenden Fall über einen Metallring 44 - ein definiertes Verspannen der Einzelteile im Bereich des Drehgelenks 20. Dabei sorgen die Lager-Ringe 26, 28, 30 für einen definierten gegenseitigen Lagerabstand zwischen den Scherenstab-Reihen 16, 17 sowie zwischen den Scherenstäben 14 und dem Bolzenkopf 38 sowie der Sicherungsmutter 32 bzw. dem Metallring 44. Die Lager-Hülsen 34, 36 sorgen für eine definierte Drehzentrierung und Lagerung der Scherenstäbe 14.

Das in Fig. 3 dargestellte und oben beschriebene Drehgelenk 20 kann auch als Drehgelenk 18 verwendet werden.

Um im Bereich der Drehgelenke 20 eine Verbindung mit der Schutzabdeckung 10 zu ermöglichen, trägt der Bolzenkopf 38 im vorliegenden Beispiel von Fig. 3 über eine hieran beispielsweise angeschweißte Abstandsplatte 42 ein Halteglied 40. Dieses ist an einem Faltenbalg-Rahmen 48 des Faltenbalges 46 befestigt. Auf diese Weise sorgt die Stabilisierungsschere 12 dafür, daß beim Verlängern und Verkürzen der Schutzabdeckung 10 deren Einzelteile gleichmäßig geführt bewegt und stabilisiert werden. Die Stabilisierungsschere 12 befindet sich an der durch den Faltenbalg 46 zu schützenden Maschinenseite.

Entsprechendes gilt auch für die Schutzabdeckung 10 in Form einer Teleskop-Stahlabdeckung 50 aus Fig. 4. Diese besteht aus abgewinkelten, ineinandergreifenden Teleskopteilen 52, die als Schutz für im Inneren der Schutzabdeckung 10 befindliche Teile, wie Maschinenspindeln, dienen und in Pfeilrichtung A relativ zueinander bewegbar sind. Auch diese Bewegungsabläufe werden im vorliegenden Fall durch zwei Stabilisierungsscheren 12 koordiniert, die sich an der Seite der zu schützenden Teile befinden, im vorliegenden Fall also an der Unter- bzw. Innenseite der Teleskop-Stahlabdeckung 50.

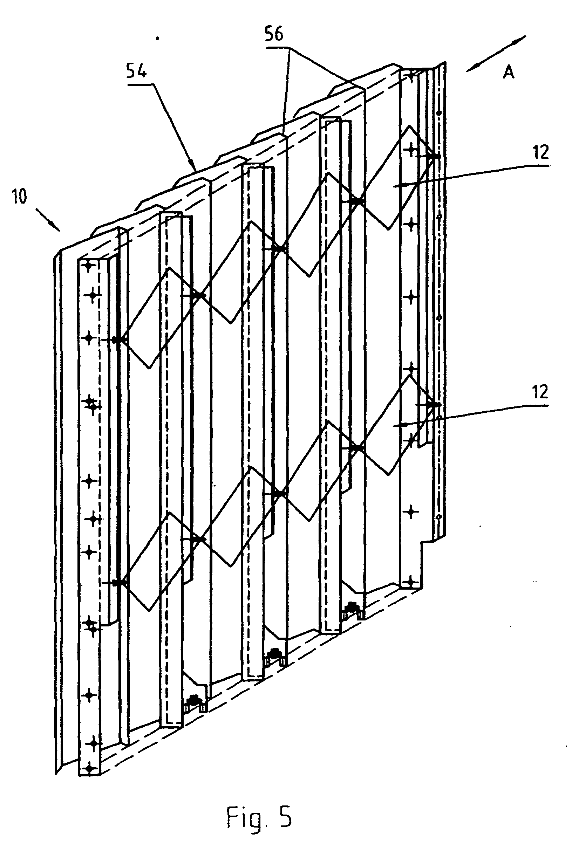

Die Schutzabdeckung 10 aus Fig. 5 ist als Teleskop-Lamellenabdeckung 54 mit sich gegenseitig überlappenden Lamellen 56 ausgebildet. Im vorliegenden Fall sorgen wiederum zwei Stabilisierungscheren 12 an der durch die Lamellen 56 zu schützenden Seite der Schutzabdeckung 10 für ein gleichmäßiges Verlängern und Verkürzen derselben. Die Scherenstäbe der Stabilisierungsscheren 12 sind wie zuvor im Zusammenhang mit den Drehgelenken 20 beschrieben an nicht bezeichneten Stegen der Lamellen 56 festgelegt.

Aus den Figuren ist ersichtlich, daß an den Enden der Stabilisierungsscheren 12 die Drehgelenke 18, 20 praktisch gleiche Funktionen haben. Sie dienen einerseits als gelenkige Verbindungselemente der Enden von verkürzt ausgebildeten Scherenstäben 14 - unterschiedlicher Scherenstab-Reihen 16, 17 - und andererseits als Mittel zum Befestigen der Scherenstab-Reihen 16, 17 an der jeweiligen Schutzabdeckung.

Die definiert einstellbaren Drehgelenke 18,20 können auch mit selbsttätig arbeitenden Nachstellmitteln zum Aufrechterhalten einer im wesentlichen konstanten Vorspannung der definierten Einstellungen der Drehgelenke ausgerüstet sein. Beispielsweise können diese Nachstellmittel als Federn, wie Tellerfedern, ausgebildet sein.

## Patentansprüche

1. Stabilisierungsschere für eine zum Abdecken von Maschinenteilen dienende längenveränderliche Schutzabdeckung, wobei die längenveränderliche Stabilisierungsschere (12) aus mehreren, sich endseitig überlappenden und dort gelenkig miteinander verbundenen Scherenstäben (14) besteht, die wenigstens zwei zickzackförmige, sich gegenseitig überkreuzende und im Überkreuzungsbereich gelenkig miteinander verbundene Scherenstab-Reihen (16, 17) bilden, und wobei die Scherenstäbe an ihren gegenseitigen Gelenkverbindungen mit der Schutzabdeckung verbindbar sind,
**dadurch gekennzeichnet,**
**daß** die Scherenstäbe (14) aus geschlossenen kastenförmigen Hohlprofilen bestehen.

2. Stabilisierungsschere nach Anspruch 1, **dadurch gekennzeichnet, daß** die Scherenstäbe (14) aus flachen kastenförmigen Hohlprofilen bestehen.

3. Stabilisierungsschere nach Anspruch 1 oder 2, **dadurch gekennzeichnet, daß** die Scherenstäbe (14) aus Leichtmetall bestehen.

4. Stabilisierungsschere nach Anspruch 3. **dadurch gekennzeichnet, daß** die Scherenstäbe (14) aus Aluminium bestehen.

5. Stabilisierungsschere nach Anspruch 1 oder 2, **dadurch gekennzeichnet, daß** die Scherenstäbe (14) aus Kunststoff bestehen.

6. Stabilisierungsschere nach Anspruch 5. **dadurch gekennzeichnet, daß** die Scherenstäbe (14) aus faserverstärktem, wie glasfaserverstärktem, Kunststoff bestehen.

7. Stabilisierungsschere nach Anspruch 1 oder 2, **dadurch gekennzeichnet, daß** die Scherenstäbe (14) aus Stahl bestehen.

8. Stabilisierungsschere nach einem der Ansprüche 1 bis 7, **dadurch gekennzeichnet, daß** die Scherenstäbe (14) aus geschlossenen kastenförmigen Hohlprofilen mit inneren Versteifungsrippen bestehen.

9. Stabilisierungsschere nach einem der Ansprüche 1 bis 8, **dadurch gekennzeichnet, daß** die Gelenkverbindungen als definiert einstellbare Drehgelenke (18, 20) ausgebildet sind.

10. Stabilisierungsschere nach Anspruch 9. **dadurch gekennzeichnet, daß** jedes Drehgelenk (18, 20) einen die Scherenstäbe (14) durchdringenden Lagerbolzen (22) und mehrere diesen umschließende, an den Scherenstäben beidseitig anliegende Lager-Ringe (26, 28, 30) aufweist, die zusammen mit den Scherenstäben durch eine endseitige aufschraubbare Sicherungsmutter (32) des Lagerbolzens (22) verspannbar eingestellt sind.

11. Stabilisierungsschere nach Anspruch 10, **dadurch gekennzeichnet, daß** die Lager-Ringe (26, 28, 30) aus Kunststoff bestehen.

12. Stabilisierungsschere nach Anspruch 11, **dadurch gekennzeichnet, daß** die Lager-Ringe (26, 28, 30) aus Polyamid bestehen.

13. Stabilisierungsschere nach Anspruch 10, **dadurch gekennzeichnet, daß** die Lager-Ringe (26, 28, 30) aus Nichteisenmetall, wie Messing oder Bronze, bestehen.

14. Stabilisierungsschere nach einem der Ansprüche 9 bis 13, **dadurch gekennzeichnet, daß** zwei Lager-Ringe (26, 28) mit die Scherenstäbe (14) teilweise durchdringenden, den Lagerbolzen (22) umschließenden Lager-Hülsen (34, 36) ausgebildet sind.

15. Stabilisierungsschere nach einem der Ansprüche 9 bis 14, **dadurch gekennzeichnet, daß** der Lagerbolzen (22) an seinem zur Sicherungsmutter (32) entgegengesetzten Ende einen Bolzenkopf (38) aufweist, der ein an einer Schutzabdeckung (10) zu befestigendes Halteglied (40) trägt.

16. Stabilisierungsschere nach Anspruch 15, **dadurch gekennzeichnet, daß** das Halteglied (40) über eine Abstandsplatte (42) am Bolzenkopf (38) angeschweißt ist.

17. Stabilisierungsschere nach einem der Ansprüche 9 bis 16, **dadurch gekennzeichnet, daß** die definiert einstellbaren Drehgelenke (18,20) mit selbsttätig arbeitenden Nachstellmitteln zum Aufrechterhalten einer im wesentlichen konstanten Vorspannung der definierten Einstellungen der Drehgelenke ausgerüstet sind.

18. Stabilisierungsschere nach Anspruch 17, **dadurch gekennzeichnet, daß** die Nachstellmittel als Federn, wie Tellerfedern, ausgebildet sind.

## Claims

1. Scissor-type stabilising structure for a protective covering which is variable in length and used for covering machine components, wherein the scissor-type stabilising structure (12) which is variable in length consists of a plurality of scissor bars (14) overlapping at the ends, where they are articulated to one another, the bars forming at least two mutually crossing zigzag rows (16, 17) of scissor bars articulated to one another in the crossing region, and wherein the scissor bars can be connected to the protective covering at their mutual articulated joints, **characterised in that** the scissor bars (14) consist of closed box-shaped hollow profiles.

2. Scissor-type stabilising structure according to claim 1, **characterised in that** the scissor bars (14) consist of flat box-shaped hollow profiles.

3. Scissor-type stabilising structure according to claim 1 or 2, **characterised in that** the scissor bars (14) consist of light metal.

4. Scissor-type stabilising structure according to claim 3, **characterised in that** the scissor bars (14) consist of aluminium.

5. Scissor-type stabilising structure according to claim 1 or 2, **characterised in that** the scissor bars (14) consist of plastics material.

6. Scissor-type stabilising structure according to claim 5, **characterised in that** the scissor bars (14) consist of fibre-reinforced, such as glass fibre-reinforced, plastics material.

7. Scissor-type stabilising structure according to claim 1 or 2, **characterised in that** the scissor bars (14) consist of steel.

8. Scissor-type stabilising structure according to any of claims 1 to 7, **characterised in that** the scissor bars (14) consist of closed box-shaped hollow profiles with inner reinforcing ribs.

9. Scissor-type stabilising structure according to any of claims 1 to 8, **characterised in that** the articulated joints are designed as hinges (18, 20), which can be adjusted in a defined manner.

10. Scissor-type stabilising structure according to claim 9, **characterised in that** each hinge (18, 20) comprises a gudgeon pin (22) penetrating the scissor bar (14) and a plurality of bearing rings (26, 28, 30) surrounding the gudgeon pin and resting on either side of the scissor bars, which bearing rings, together with the scissor bars, can be tightened by a lock nut (32) of the gudgeon pin (22) which can be screwed onto the end.

11. Scissor-type stabilising structure according to claim 10, **characterised in that** the bearing rings (26, 28, 30) consist of plastics material.

12. Scissor-type stabilising structure according to claim 11, **characterised in that** the bearing rings (26, 28, 30) consist of polyamide.

13. Scissor-type stabilising structure according to claim 10, **characterised in that** the bearing rings (26, 28, 30) consist of non-ferrous metal, such as copper or bronze.

14. Scissor-type stabilising structure according to any of claims 9 to 13, **characterised in that** two bearing rings (26, 28) are constructed with bearing bushes (34, 36) partially penetrating the scissor bars (14) and surrounding the gudgeon pin (22).

15. Scissor-type stabilising structure according to any of claims 9 to 14, **characterised in that**, at its end opposing the lock nut (32), the gudgeon pin (22) has a pin head (38) carrying a retaining member (40) to be fastened to a protective covering (10).

16. Scissor-type stabilising structure according to claim 15, **characterised in that** the retaining member (40) is welded via a spacer plate (42) to the pin head (38).

17. Scissor-type stabilising structure according to any of claims 9 to 16, **characterised in that** the hinges (18, 20) which can be adjusted in a defined manner are equipped with automatically operating adjusting means for maintaining a substantially constant bias of the defined adjustments of the hinges.

18. Scissor-type stabilising structure according to claim 17, **characterised in that** the adjusting means are constructed as springs, such as cup springs.

## Revendications

1. Structure de stabilisation articulée pour un capot de protection de longueur variable servant à recouvrir des pièces de machines, la structure de stabilisation articulée (12) de longueur variable se composant de plusieurs barres articulées (14) qui se chevauchent côté extrême où elles s'articulent entre elles, et qui forment au moins deux rangées de barres articulées (16, 17) en zigzag, qui se croisent mutuellement et s'articulent entre elles dans la zone de croisement, et les barres articulées pouvant être assemblées avec le capot de protection sur leurs assemblages articulés mutuels, **caractérisée en ce que** les barres articulées (14) se composent de profilés creux fermés en forme de caisson.

2. Structure de stabilisation articulée suivant la revendication 1, **caractérisée en ce que** les barres articulées (14) se composent de profilés creux plats en forme de caisson.

3. Structure de stabilisation articulée suivant l'une des revendications 1 et 2, **caractérisée en ce que** les barres articulées (14) se composent de métal léger.

4. Structure de stabilisation articulée suivant la revendication 3, **caractérisée en ce que** les barres articulées (14) se composent d'aluminium.

5. Structure de stabilisation articulée suivant l'une des revendications 1 et 2, **caractérisée en ce que** les barres articulées (14) se composent de matière plastique.

6. Structure de stabilisation articulée suivant la revendication 5, **caractérisée en ce que** les barres articulées (14) se composent de matière plastique renforcée par des fibres, telle que matière plastique renforcée par des fibres de verre.

7. Structure de stabilisation articulée suivant l'une des revendications 1 et 2, **caractérisée en ce que** les barres articulées (14) se composent d'acier.

8. Structure de stabilisation articulée suivant l'une des revendications 1 à 7, **caractérisée en ce que** les barres articulées (14) se composent de profilés creux fermés en forme de caisson avec des nervures de renforcement intérieures.

9. Structure de stabilisation articulée suivant l'une des revendications 1 à 8, **caractérisée en ce que** les assemblages articulés sont réalisés sous forme d'articulations à charnières (18, 20) réglables de façon définie.

10. Structure de stabilisation articulée suivant la revendication 9, **caractérisée en ce que** chaque articulation à charnière (18, 20) présente un axe de palier (22) traversant les barres articulées (14) et plusieurs bagues de palier (26, 28, 30) qui entourent ce dernier, s'appliquent de part et d'autre sur les barres articulées, et sont réglées sous précontrainte avec les barres articulées par un contre-écrou (32), vissé côté extrême, de l'axe de palier (22).

11. Structure de stabilisation articulée suivant la revendication 10, **caractérisée en ce que** les bagues de palier (26, 28, 30) se composent de matière plastique.

12. Structure de stabilisation articulée suivant la revendication 11, **caractérisée en ce que** les bagues de palier (26, 28, 30) se composent de polyamide.

13. Structure de stabilisation articulée suivant la revendication 10, **caractérisée en ce que** les bagues de palier (26, 28, 30) se composent de métal non ferreux, tel que laiton ou bronze.

14. Structure de stabilisation articulée suivant l'une des revendications 9 à 13, **caractérisée en ce que** deux bagues de palier (26, 28) sont réalisées avec des coussinets (34, 36) qui traversent partiellement les barres articulées (14) et entourent l'axe de palier (22).

15. Structure de stabilisation articulée suivant l'une des revendications 9 à 14, **caractérisée en ce que** l'axe de palier (22) présente sur son extrémité opposée au contre-écrou (32) une tête de boulon (38), qui supporte un organe de retenue (40) à fixer sur un capot de protection (10).

16. Structure de stabilisation articulée suivant la revendication 15, **caractérisée en ce que** l'organe de retenue (40) est soudé sur la tête de boulon (38) par l'intermédiaire d'une plaque d'écartement (42).

17. Structure de stabilisation articulée suivant l'une des revendications 9 à 16, **caractérisée en ce que** les articulations à charnières (18, 20) réglables de façon définie sont pourvues de moyens d'ajustage automatiques pour maintenir une précontrainte essentiellement constante de leurs réglages définis.

18. Structure de stabilisation articulée suivant la revendication 17, **caractérisée en ce que** les moyens d'ajustage sont réalisés sous forme de ressorts, tels que ressorts à disques.
